# EUROPEAN PATENT SPECIFICATION

(11) **EP 1 332 904 B1**
(45) Date of publication and mention of the grant of the patent: **13.08.2008**
(21) Application number: 03001100.1
(22) Date of filing: 20.01.2003
(51) Int. Cl.: B60J 7/06, E04H 3/16, E04B 1/343, B60J 7/04

(54) **Telescopic cover with imbricated elements**
Teleskopische Abdeckplane mit schuppenartigen Elementen
Bâche de couverture avec éléments imbriqués

(30) Priority: 04.02.2002 IT MI20020192
(43) Date of publication of application: 06.08.2003
(73) Proprietor: Sanna, Ignazio, 09134 Pirri (Cagliari) (IT)
(72) Inventor: Sanna, Ignazio, 09134 Pirri (Cagliari) (IT)
(74) Representative: Petruzziello, Aldo

(56) References cited:
- FR-A- 2 526 469
- FR-A- 2 568 288
- US-A- 3 910 629
- US-A- 4 741 570
- US-A- 5 203 603

## Description

The present invention refers to mobile covers for areas, such as covers for swimming pools, tennis courts, vehicle bodies or trailers, sheds and the like. Known to the art are covers that comprise a plurality of cover elements movable between a retracted position wherein they are superimposed on each other to occupy a minimum space and leave the area uncovered, and an extended position, wherein they are at least partially extracted with respect to each other so as to cover the area.

Italian patent N° 1 325 708 (corresponding to the European Patent N°1 270 299) by the same applicant describes a telescopic cover, wherein each cover element is provided with two supporting feet on each side, and on each side the front supporting feet of the elements engage a first runway of a rail and the rear supporting feet of the elements engage another runway of the rail. The runways on each side are inclined in a parallel manner at one collecting end so as to allow a superimposed arrangement of the cover elements in the retracted position. Reference is made to the previous application for all details that are not described in the present application.

FR-A-2 526 469 refers to a system for covering areas consisting of a fixed cover element and of movable cover elements, each of which has front wheels sliding on the ground and rear wheels sliding on a track belonging to the immediately preceding cover element, where the track belonging to a movable cover element is at a higher level than that of the fixed element.

Said cover elements are different each to other as each of them has a height and a width smaller then those of the preceding element; in the extended position of the covering system, the front edge of a cover element does not rest on the rear edge of the cover element immediately in front.

The cover as disclosed in claim 1 has been devised with the intent of further improving the telescopic cover. Further new and useful features are disclosed in the dependent claims. In other words, the new cover comprises a single runway on each side of the area to be covered, with the exception of the collecting area, and the elements of the new telescopic cover have sliding feet on each side disposed so that in the extended position of the cover, each rear element rests with its rear feet on the track and with a front edge on a rear edge of a front element, without necessarily resting on the front feet. The track can consist of a stretch of flat ground, which may or may not be delimited at the sides by a concrete bed or by a metal section.

The new cover allows installation costs and space occupied on the ground to be reduced. Furthermore, it facilitates assembly operations.

Non-limiting embodiments of the invention will be described hereunder with reference to the attached drawings, wherein:
Figure 1 is an axonometric view, on a reduced scale, of a portion of cover according to the present invention, comprising a distal outermost cover element and an adjacent cover element, in the extended position;
Figure 2 is an axonometric view, on a reduced scale, of the cover in Figure 1, in the retracted position,
Figure 3 is a front view, on a reduced scale, of two elements of a cabin-type cover according to the invention, in the extended position;
Figure 4 is an enlarged front view, broken off, of the detail denoted by A in Figure 3;
Figure 5 is a side view, on a reduced scale and broken off, of the cover of Figures 3 and 4, extended;
Figure 6 is a side view, on a reduced scale, of the cover of the previous figure, in the retracted position;
Figure 7 shows the detail B of Figure 6, enlarged;
Figure 8 shows the detail C of Figure 5, enlarged;
Figure 9 shows the detail D of Figure 5, enlarged;
Figure 10 shows the detail E of Figure 5, enlarged;
Figure 11 is a front view, on a reduced scale, of a half-cabin cover, in particular of two elements in the extended position. The detail A is as illustrated in Figure 4;
Figure 12 illustrates the detail F, enlarged;
Figure 13 illustrates, in the scale of Figure 7, the cover of Figure 11 in the retracted position and broken off, from the left in Figure 11;
Figure 14 illustrates, on reduced scale in a broken off side view, and in the extended position, a variant of the cover, whose proximal element is vertically raisable;
Figure 15 illustrates the cover of Figure 14 in the retracted position;
Figure 16 illustrates the detail F of Figure 15 enlarged;
Figure 17 is a broken-off perspective view of an element of a further variant of the cover, illustrated near the collecting end;
Figure 18 is a broken-off rear view of the element of Figure 17;
Figure 19 is a broken-off side view showing a cover element of another embodiment of the invention;
Figure 20 is a broken-off perspective view of a further embodiment of the cover;
Figure 21 illustrates a detail of Figure 20, enlarged.

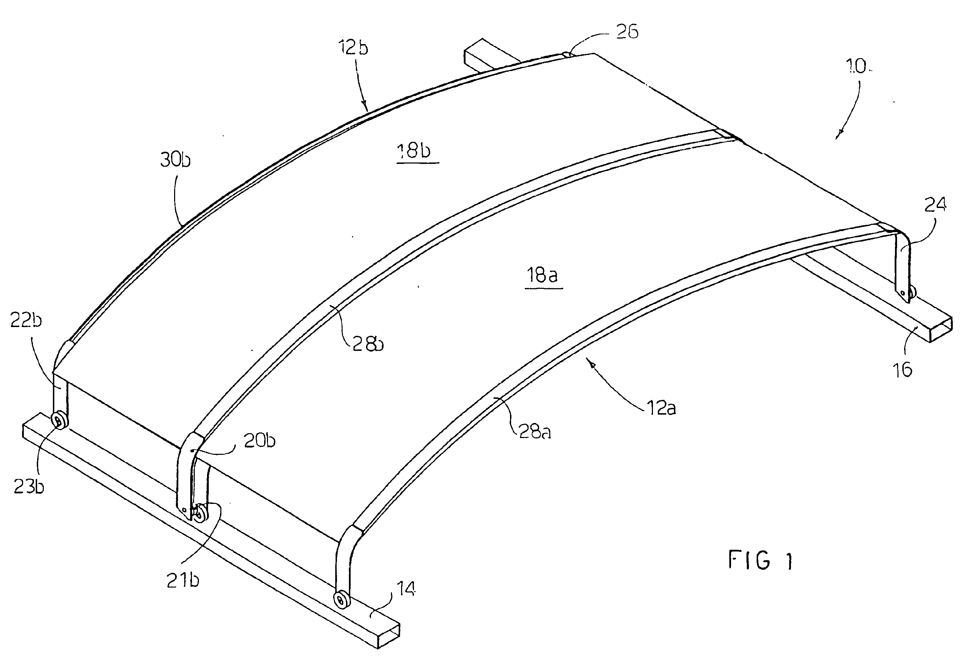

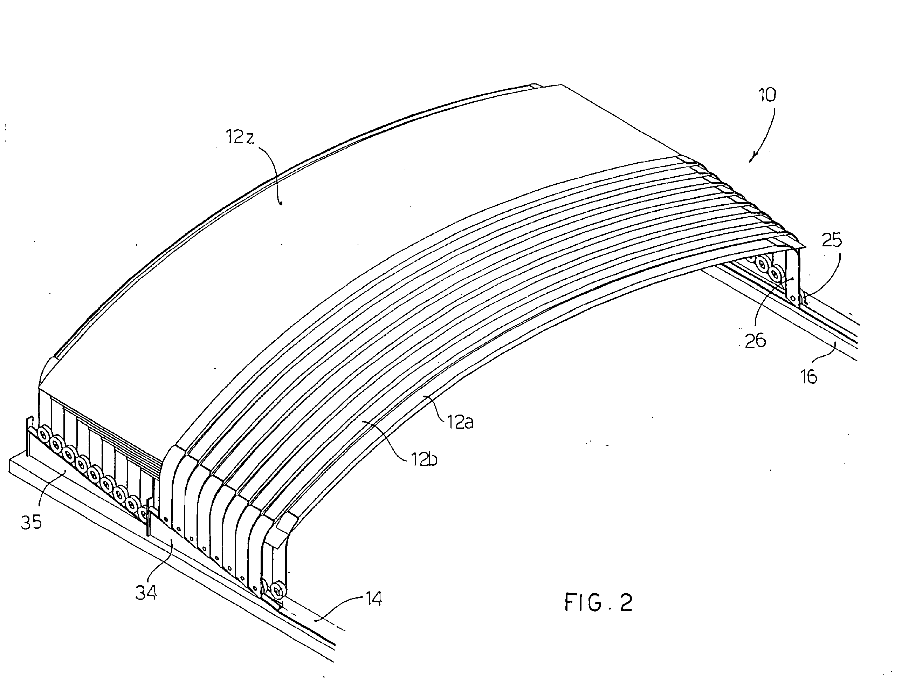

With reference first of all to Figures 1 and 2, a telescopic cover according to this application has been indicated as a whole with reference numeral 10, and comprises a plurality of cover elements 12, only two of which are illustrated. The front or most downstream or distal element is denoted by 12a, the adjacent rear element is denoted by 12b.

The generic cover element 12 (a or b; in this description the reference letter is omitted when reference is made to generic elements) comprises a cover panel 18 and four travelling legs, two on each side, denoted respectively by 20, 22, 24, 26. The panel 18 in the example is arch-shaped in a front view, but could have other configurations, and preferably has a front or distal stiffening rib 28, protruding upwards and a rear or proximal stiffening rib 30 protruding downwards. The cover elements 12 generally have an identical shape except for the first and the last ones.

Each leg ends at the bottom in a sliding foot.

The sliding feet, preferably but not necessarily with wheeled, are denoted by 21, 23 on one side and 25, 27 on the other side.

A sliding track is denoted by 14 on one side and by 16 on the other. According to the invention, a sliding track can be any surface whereon the sliding feet can slide. Said surface must not necessarily be delimited and can consist in a surface of sufficiently flat ground, in a cement foundation, in a metal section, in a rail or other. The sliding track will preferably be formed by a rail with a single runway, as will be described later. Only at the collecting end the sliding track necessarily comprises on either side two runways on parallel inclined ramps 34, 35, made with metal sections or other as stated in the aforementioned previous patents.

According to the present invention, the cover elements 12 are of such a size that, in the extended position of the cover, each rear element 12n rests with its front edge, in particular with its front rib 28n, on the rear edge, in particular on the rear rib 30(n-1), of the front cover element 12 (n-1). In this manner, only the front or distal element 12a rests on the runway with all four feet 21a, 23a, 25a, 27a, in all positions (extended, retracted or intermediate). The other elements rest with their front feet and with their rear feet only on the collecting ramps. To achieve this, the front legs of each rear element can be provided to be slightly shorter than the rear legs.

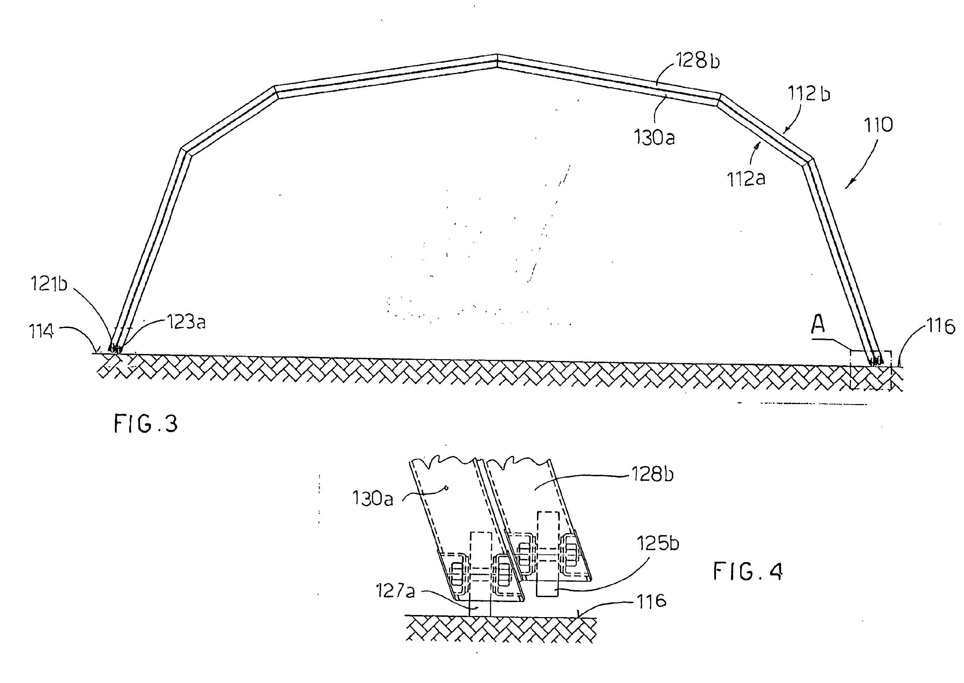

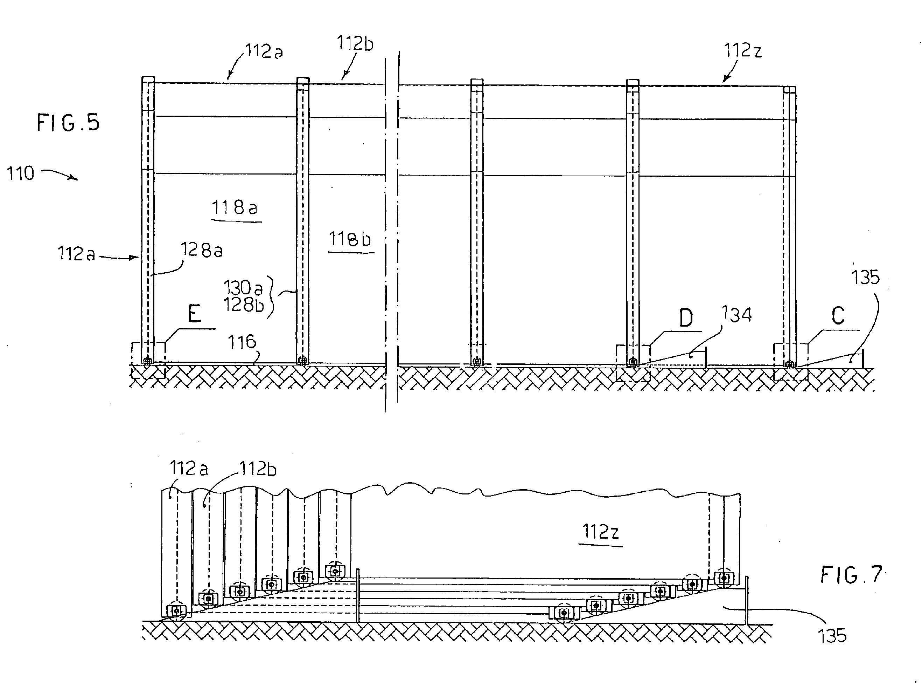

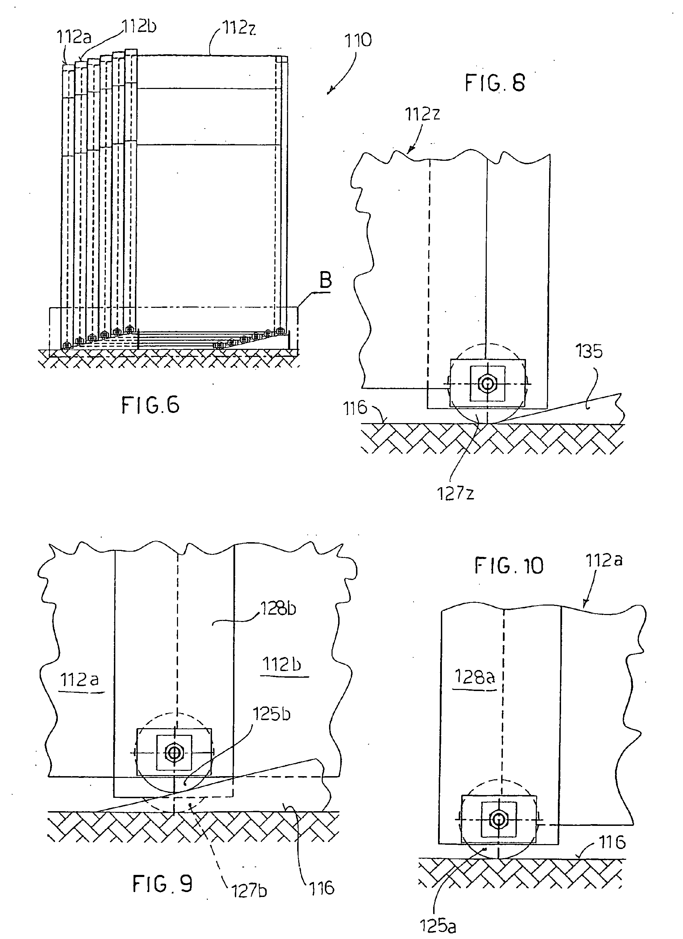

A telescopic cover 110 is illustrated in figures 3-13. The cover elements thereof are denoted by 112a, 112b, etc., and generally all the details that correspond to the preceding cover have the same reference numerals increased by 100, and will not be described in detail. As can be seen in the figures, in the extended condition of the cover, the element 112b rests with the front rib 128b on the rear rib 130a of the front element 112a and does not rest with the front feet 121b, 125b on the tracks 114, 116. In the retracted position, on each side the rear feet 123b, 127b rest on the ramps 135, the front feet on the ramp 134, and the ramps 134, 135 are offset transversally from each other by at least the thickness of the feet. The arrangement of the front wheeled foot 125a of the element 112a on the track 116 is readily visible in Figures 5 and 10, the arrangement of the rear wheeled foot 127a of the element 112a on the track and the raised arrangement of the front wheeled foot 125b of the element 112b is readily visible in Figure 9. Figure 8 shows the rear wheeled foot 127z of the proximal element 112z at the start of the collecting ramp 135.

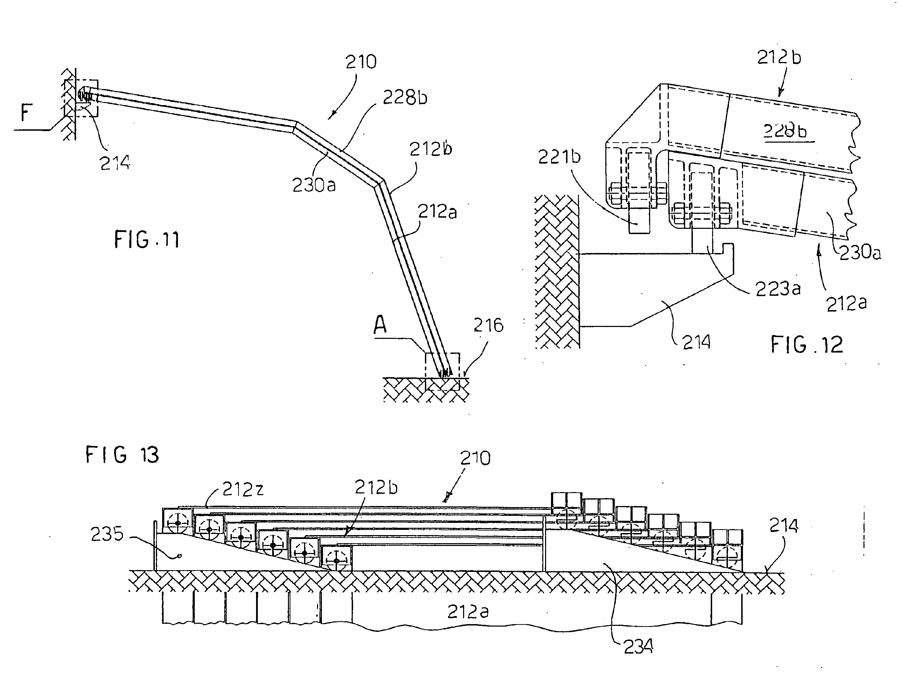

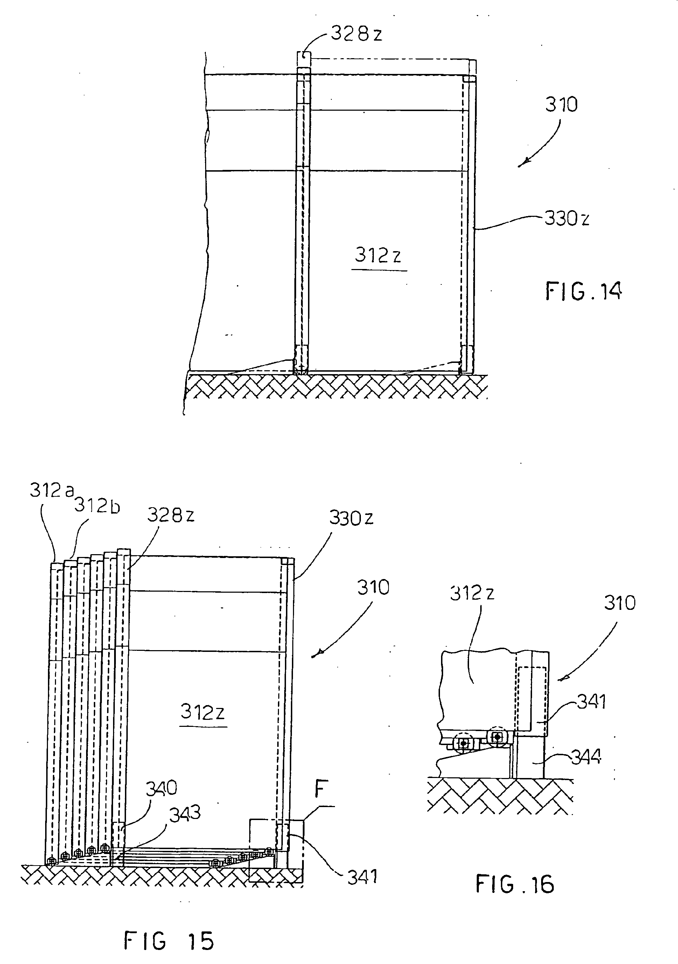

The telescopic cover illustrated in Figures 11-13, denoted as a whole with 210, has the sliding feet and the sliding tracks at two different levels on the two sides. Cover elements 210 that correspond to cover elements 110 bear the same reference numerals increased by 100 and in some cases will not be described in detail. The cover 210 comprises cover elements 212a, 212b ..... each of which has a shape in a front view substantially corresponding to the shape of a half of the corresponding element of the embodiment 110. The sliding track 216 corresponds substantially to the sliding track 116, whilst the sliding track 214 is situated in a higher position, for example on a wall. In the extended position illustrated in Figures 11 and 14, each rear cover element, for example 212b, rests with the front edge or rib, for example 228b, on the rear edge or rib, for example 230a, of a front cover element, for example 212a. The front sliding feet of the rear element do not rest on the tracks. The position of the sliding feet with respect to the track on the lower level is similar to that illustrated in Figure 4. The position of the sliding feet on the upper track 214 is illustrated in Figure 12, where it can be seen that the feet 223a of the front element rest on the track, whilst the front feet 221b of the rear element do not rest. In the retracted , illustrated in Figure 13, the elements rest on the ramps 234, 235 with the front and rear feet.

With reference to Figures 14, 15 and 16 a further variant of the invention is now illustrated. In the cover of figures 14 to 16, denoted as a whole with reference numeral 310, elements corresponding to those of the cover 10 bear the same reference numerals increased by 300 and will not be further described.

The cover 310 comprises cover elements 312a, 312b ... 312z, suitable to be disposed in an imbricated or partially overlapping condition as previously stated with reference to other embodiments. In this particular case, the proximal cover element or that placed at the rear end, denoted by 312z instead of (or besides) being provided with sliding feet, wheeled or of different type, to slide on a sliding track, is able to slide vertically for a distance, to take on a higher position and to act as a protective casing for the other cover elements disposed in the retracted position. In particular, at the level of the front rib 328z and the rear rib 330z, the element 312z is integral with sleeves (whereof only two are visible and are denoted by 340, 341) sliding vertically on fixed pegs 343, 344. Any one of various known means, such as a jack means, not illustrated, can be provided for raising and lowering the sleeves. In this embodiment, on extending the cover, the cover element 312z remains longitudinally fixed the collecting ramps, and the front cover elements are made to slide with respect thereto, until each rear element rests with its edge on the element immediately in front, as explained with reference to the preceding embodiments. The element 312z can be left in the raised position or preferably it is lowered to the level of the other elements. In order to return to the retracted position, the proximal element 312z is first raised to act as a protective casing, then the other elements are made to slide one inside the other in a similar manner to that described with reference to the other embodiments.

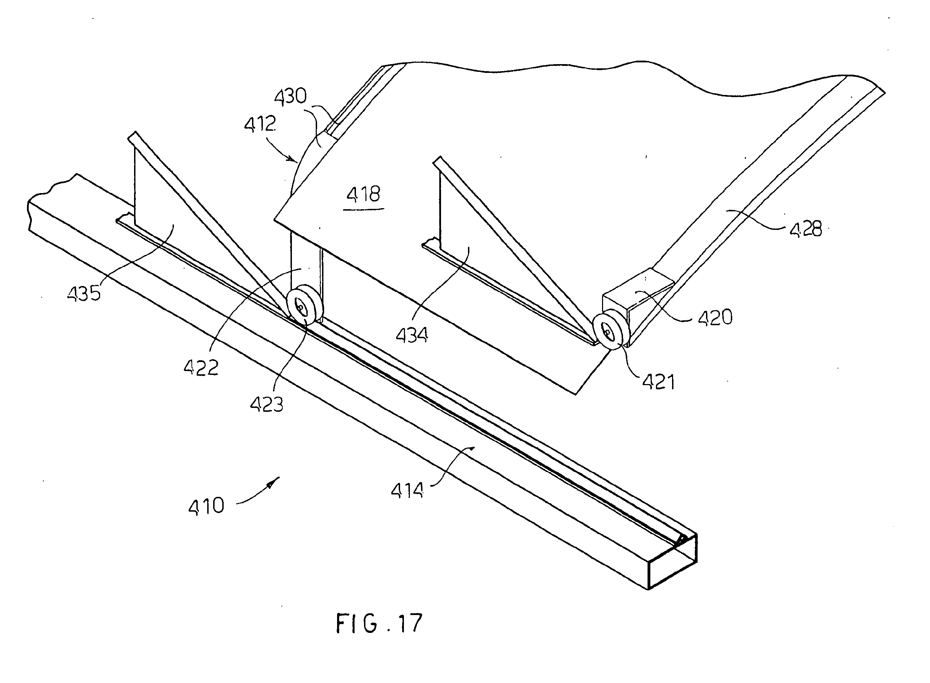

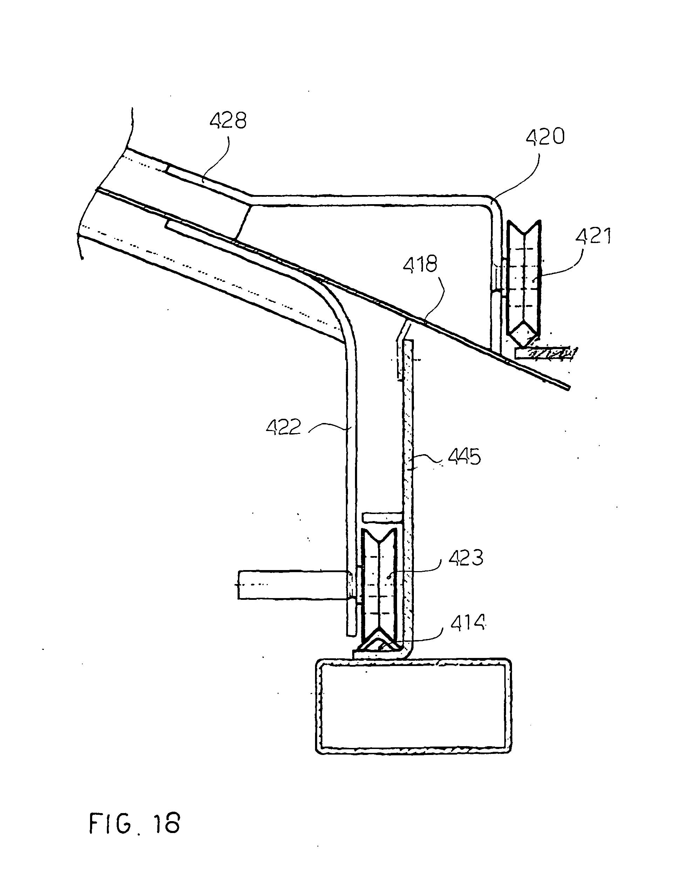

With reference now to Figures 17, 18, a cover element 412 of a cover 410, which comprises a plurality of said elements, is illustrated therein. The element 412 comprises a cover panel 418, with a front rib 428 and a rear rib 430. A rear side leg 422, which ends at the bottom with a wheeled foot 423, can be seen under the rear rib 430. According to a peculiarity of this embodiment, each of the front wheeled feet, whereof only one is visible in the figure and is denoted by 421, is carried on a support 420 integral with the front rib 428, to a much higher level than the rear feet. In this case the front collecting ramp 434 and the rear one 435 are also disposed with an appreciable difference in level therebetween. Reference numeral 445 denotes a side metal sheet which protects the rear wheeled foot. The cover 410 is suitable to take on an imbricate configuration like the preceding ones, in the extended position, with the front rib 428 of each rear cover element resting on the rear rib 430 of a cover element immediately in front.

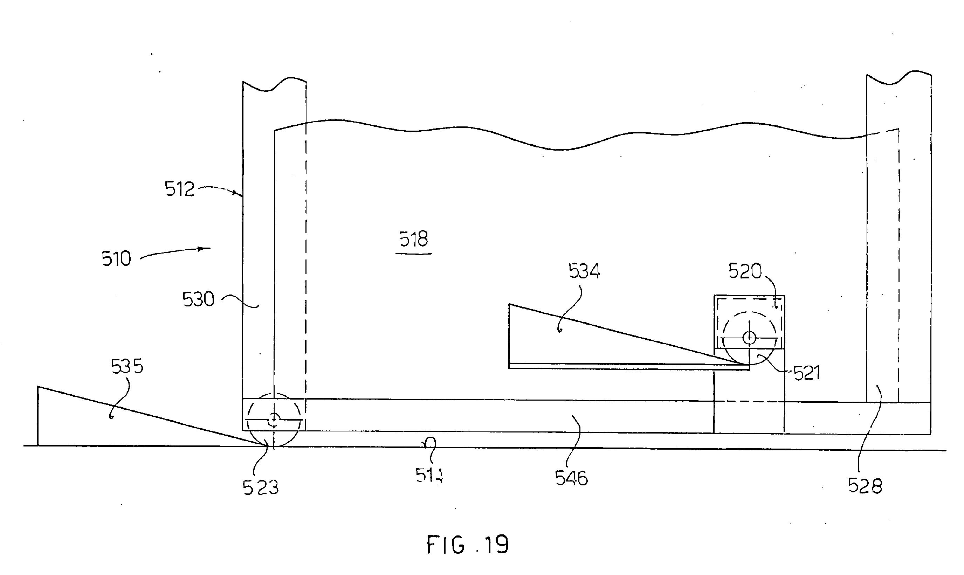

Each front or rear wheeled foot must not necessarily be mounted on the front rib but, as shown in Figure 19, it can be mounted in a longitudinally and/or vertically intermediate position on the beam 546, possibly with the aid of stiffening gusset plates or brackets (not illustrated). An element 512 of the cover 510 of Figure 19 thus comprises a cover panel 518, with a front rib 528 without feet, a rear rib 530 with a foot 523 on each side, and a connecting beam 546 between the ribs on each side. It further comprises on each side an intermediate support 520 carried on the connecting beam 546. The support 520 caries a wheeled foot 521. Reference numerals 534, 535 denote he collecting ramps on the side visible in the drawings. The cover 510 is able to take on an imbricated configuration like the preceding ones, in the extended position, with the front rib 528 of each rear cover element resting on the rear rib 530 of a cover element immediately in front.

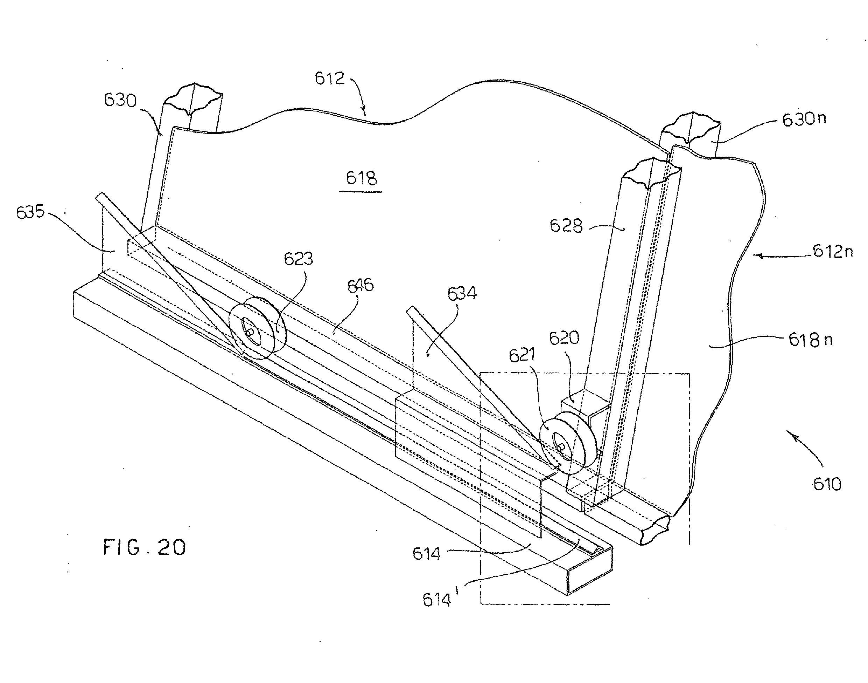

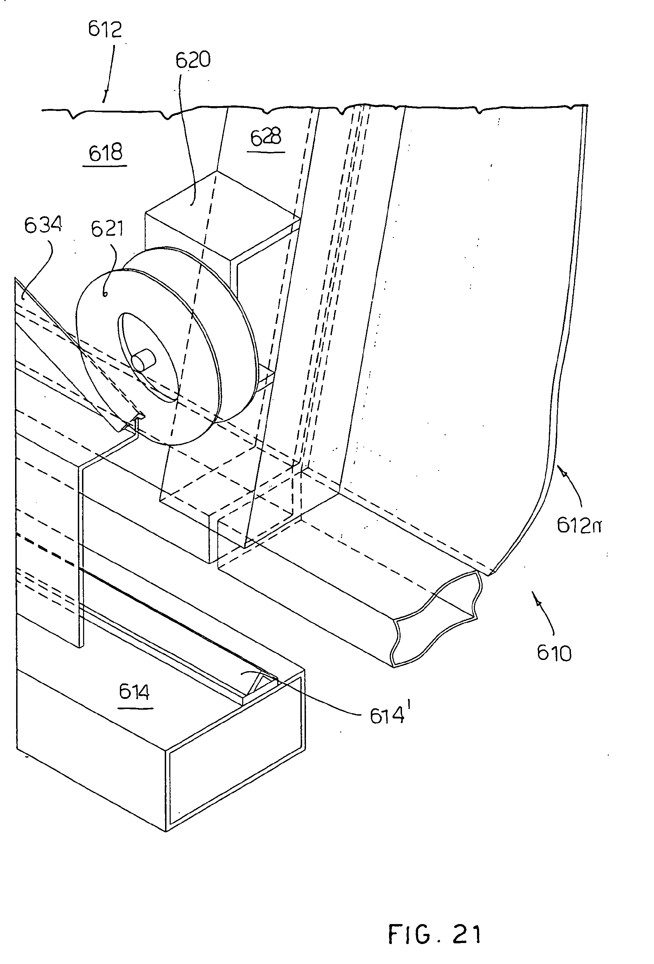

Figures 20 and 21 illustrate a further variant of the cover, denoted as a whole with reference numeral 610. A cover element 612 of the cover 610 is illustrated in the extended position, resting with its front edge, precisely with the front rib 628 on the rear edge, or on the rear rib 630n of the front cover element 612. The cover element 612n comprises a cover panel 618 and, on each side, a connecting beam 646 extends between the rear rib 630 and the front rib 628. On each side, the front wheeled foot 621 is mounted on a support 620 integral with the front rib and the rear wheeled foot 623 is mounted on the beam 646 at a certain distance from the rear rib. The feet 621, 623 are "coplanar", that is to say, they travel along courses that are on the same vertical plane and are at a different height with respect to the track 614. This allows a more compact structure and the use of a single rail 614'. At the collecting end on each side, the front ramp 634 (for foot 621) and the rear ramp 635 (for foot 623) have respective runways coplanar. The ramp 634 is positioned at a sufficient height to allow the foot 623 to pass thereunder.

It is understood that all modifications to what has been described that are accessible to a person skilled in the art come within the scope of the present invention as defined in the appended claims.

## Claims

1. A telescopic cover for areas, comprising a plurality of cover elements (12; 112; 212; 312; 412; 512; 612) moveable one with respect to the other between an extended position, wherein they cover the area, and a retracted position, wherein they occupy a reduced collecting area and vice versa, said cover elements comprising a cover panel (18; 118; 218; 318; 418; 518; 618) and at least one rear and one front sliding foot (21, 23, 25, 27) on each side, said sliding feet (21, 23, 25, 27) being slidable on lateral sliding tracks (14, 16), **characterised in that the cover elements (12; 112; 212; 312; 412; 512; 612) are identical to each other and in that,** in the extended position, at least one cover element (12b) rests on the tracks (14, 16) with the rear sliding feet (23b, 27b) and rests with a front edge (28b) thereof on a rear edge (30b ) of a cover element (12a) immediately in front.

2. A cover according to claim 1, **characterised in that** on the collecting area each track **(14, 16)** comprises a pair of parallel inclined runways **(34, 35)** on each side.

3. A cover according to claim 1, **characterised in that** the proximal cover element (312z) is movable vertically for a distance between a lowered position, substantially on a level with the other cover elements in the extended position, and a raised position, above the level of the other cover elements in the retracted position.

4. A cover according to claim 1 **characterised in that** the front sliding feet (421; 521) of the cover elements are at an appreciably higher level with respect to the rear sliding feet (423, 523) and **in that** the ramps (434; 534) for the front feet **(421, 521)** and the ramps (435; 535) for the rear feet (**423, 523**), at the collecting end, are also on different levels corresponding to those of the sliding feet.

5. A cover according to claim 4, **characterised in that**, in a cover element (**412**), the front feet (**421**) are carried on a support (**420**) integral with the front rib (**428**).

6. A cover according to claim 4, **characterised in that**, in a cover element (**512**), the front feet (**521**) are mounted in an intermediate position on a longitudinal connecting beam (546; 646).

7. A cover according to claim 1, **characterised in that** on each side the front sliding foot (521; 621) and the rear sliding foot (523; 623) are on a different level.

8. A cover according to claim 7, **characterised in that** on each side said feet are coplanar and **in that** the runways (634, 635) at the collecting end, on each side, are coplanar.

## Patentansprüche

1. Teleskopische Abdeckplane für Bereiche, die mehrere Abdeckelemente (12, 112, 212, 312, 412, 512, 612) umfasst, die in Bezug zueinander zwischen einer ausgefahrenen Position, in der sie den Bereich abdecken, und einer eingefahrenen Position, in der sie einen geringeren Sammelbereich einnehmen, und umgekehrt verschoben werden können, wobei die Abdeckelemente eine Abdeckplatte (18, 118, 218, 318, 418, 518, 618) und mindestens einen hinteren und einen vorderen Gleitfuß (21, 23, 25, 27) auf jeder Seite umfassen, wobei die Gleitfüße (21, 23, 25, 27) auf seitlichen Gleitschienen (14, 16) verschoben werden können, **dadurch gekennzeichnet, dass** die Abdeckelemente (12, 112, 212, 312, 412, 512, 612) miteinander identisch sind und in der ausgefahrenen Position mindestens ein Abdeckelement (12b) mit den hinteren Gleitfüßen (23b, 27b) auf den Schienen (14, 16) und mit einer vorderen Kante (28b) davon auf einer hinteren Kante (30b) eines direkt davor liegenden Abdeckelements (12a) aufliegt.

2. Abdeckplane nach Anspruch 1, **dadurch gekennzeichnet, dass** in dem Sammelbereich jede Schiene (14, 16) auf jeder Seite ein Paar parallele, geneigte Laufflächen (34, 35) umfasst.

3. Abdeckplane nach Anspruch 1, **dadurch gekennzeichnet, dass** das proximale Abdeckelement (312z) zwischen einer abgesenkten Position, die sich in der ausgefahrenen Position im Wesentlichen auf einer Höhe mit den anderen Abdeckelementen befindet, und einer angehobenen Position, die in der eingefahrenen Position oberhalb der Höhe der anderen Abdeckelemente liegt, um einen Abstand vertikal verschoben werden kann.

4. Abdeckplane nach Anspruch 1, **dadurch gekennzeichnet, dass** die vorderen Gleitfüße (421, 521) der Abdeckelemente in Bezug auf die hinteren Gleitfüße (423, 523) wesentlich höher liegen und sich die Rampen (434, 534) für die vorderen Füße (421, 521) und die Rampen (435, 535) für die hinteren Füße (423, 523) am Sammelende ebenfalls auf verschiedenen Höhen befinden, die denen der Gleitfüße entsprechen.

5. Abdeckplane nach Anspruch 4, **dadurch gekennzeichnet, dass** bei einem Abdeckelement (412) die vorderen Füße (421) von einer Halterung (420) getragen werden, die mit der vorderen Rippe (428) einstückig ausgebildet ist.

6. Abdeckplane nach Anspruch 4, **dadurch gekennzeichnet, dass** bei einem Abdeckelement (512) die vorderen Füße (521) in einer Zwischenposition an einem längs verlaufenden Verbindungsträger (546, 646) angebracht sind.

7. Abdeckplane nach Anspruch 1, **dadurch gekennzeichnet, dass** sich der vordere Gleitfuß (521, 621) und der hintere Gleitfuß (523, 623) auf jeder Seite auf einer anderen Höhe befinden.

8. Abdeckplane nach Anspruch 7, **dadurch gekennzeichnet, dass** die Füße auf jeder Seite und die Laufflächen (634, 635) am Sammelende auf jeder Seite koplanar sind.

## Revendications

1. Bâche de couverture télescopique pour surfaces, comportant une pluralité d'éléments de couverture (12 ; 112 ; 212 ; 312 ; 412 ; 512 ; 612) mobiles les uns par rapport aux autres entre une position d'extension où ils recouvrent la surface et une position de rétraction où ils occupent une surface de regroupement réduite et vice-versa, lesdits éléments de couverture comprenant un panneau de couverture (18 ; 118 ; 218 ; 318 ; 418 ; 518 ; 618) et au moins un pied coulissant arrière et un pied coulissant avant (21, 23, 25, 27) de chaque côté, lesdits pieds coulissants (21, 23, 25, 27) pouvant coulisser sur des pistes de coulissement latérales (14, 16), **caractérisée en ce que** les éléments de couverture (12 ; 112 ; 212 ; 312 ; 412 ; 512 ; 612) sont identiques les uns aux autres et que, en position d'extension, au moins un élément de couverture (12b) repose sur les pistes (14, 16) par les pieds coulissants arrière (23b, 27b) et repose par un bord frontal (28b) de ceux-ci sur un bord arrière (30b) d'un élément de couverture (12a) placé directement en face.

2. Bâche de couverture selon la revendication 1, **caractérisée en ce que**, sur la zone de regroupement, chaque piste (14, 16) comprend une paire de voies de circulation inclinées parallèles (34, 35) de chaque côté.

3. Bâche de couverture selon la revendication 1, **caractérisée en ce que** l'élément de couverture proximal (312z) est mobile verticalement sur une distance située entre une position abaissée, sensiblement sur un niveau avec les autres éléments de couverture dans la position en extension et une position relevée, au dessus du niveau des autres éléments de couverture dans la position en rétraction.

4. Bâche de couverture selon la revendication 1, **caractérisée en ce que** les pieds coulissants avant (421 ; 521) des éléments de couverture sont à un niveau sensiblement plus élevé que les pieds coulissants arrière (423, 523) et que les rampes (434 ; 534) destinées aux pieds avant (421, S21) et les rampes (435 ; 535) destinées aux pieds arrière (423, 523) à l'extrémité de regroupement sont aussi à des niveaux différents correspondant à ceux des pieds coulissants.

5. Bâche de couverture selon la revendication 4, **caractérisée en ce que**, dans un élément de couverture (412), les pieds avant (421) sont portés sur un support (420) faisant bloc avec la nervure avant (428).

6. Bâche de couverture selon la revendication 4, **caractérisée en ce que**, dans un élément de couverture (512), les pieds avant (521) sont montés à une position intermédiaire sur une poutre de connexion longitudinale (546 ; 646).

7. Bâche de couverture selon la revendication 1, **caractérisée en ce que**, de chaque côté, les pieds coulissants avant (521 ; 621) et les pieds coulissants arrière (523 ; 623) sont sur un niveau différent.

8. Bâche de couverture selon la revendication 7, **caractérisée en ce que**, de chaque côté, lesdits pieds sont coplanaires et que les voies de circulation (634, 635) sont coplanaires de chaque côté à l'extrémité de regroupement.
